# FASCICULE DE BREVET EUROPEEN

(11) **EP 4 251 467 B1**
(45) Date de publication et mention de la délivrance du brevet: **24.04.2024**
(21) Numéro de dépôt: 22762085.3
(22) Date de dépôt: 11.08.2022
(51) Int. Cl.: B60N 2/28

(54) **SIÈGE AUTO PIVOTANT**
SCHWENKBARER FAHRZEUGSITZ
PIVOTING CAR SEAT

(30) Priorité: 08.09.2021 FR 2109412
(43) Date de publication de la demande: 04.10.2023
(73) Titulaire: AFL-Honeycomb Structures, 45200 Amilly (FR)
(72) Inventeur: POISSON, Olivier, 45230 MONTBOUY (FR)
(74) Mandataire: Lequien, Philippe
(86) Numéro de dépôt international: PCT/EP2022/072522
(87) Numéro de publication internationale: WO 2023/036549

(56) Documents cités:
- EP-A1- 1 391 345
- WO-A1-2013/046200
- DE-A1- 4 200 847
- FR-A1- 2 848 157

## Description

Le domaine de l'invention est celui de la conception et de la fabrication d'équipements pour enfants.

L'invention concerne plus particulièrement un siège auto pour enfants.

Classiquement, les enfants doivent être installés dans des sièges auto lorsqu'ils sont trop jeunes, ou qu'ils ne présentent pas la taille requise pour pouvoir être harnachés en toute sécurité à même le siège d'un véhicule.

Un siège auto comprend une assise enfant et un dossier enfant sur lesquels un enfant doit être harnaché. Cette assise enfant et ce dossier enfant présentent une forme et des dimensions adaptées aux enfants.

Un siège auto doit être fixé au véhicule préalablement à son utilisation.

Actuellement, de manière quasiment généralisée, les véhicules présentent des points d'ancrage issus de la norme internationale « Isofix », qui sont situés au niveau des sièges du véhicule.

Un siège auto comprend des moyens de fixation, par exemple des broches ad hoc destinées à venir se fixer sur les points d'ancrage Isofix du véhicule.

En fonction de l'âge et de la taille des enfants, les sièges auto peuvent prendre différentes formes.

Par exemple, un siège auto peut être du type « cosy bébé » et être plus particulièrement adapté aux nouveau-nés. Un siège auto peut également prendre une forme plus adaptée à des enfants plus âgés.

De manière commune à tout siège auto, ces derniers présentent des moyens de harnachement d'un enfant dans le siège auto.

Ces moyens de harnachement comprennent des sangles s'étendant entre les jambes d'un enfant et jusqu'à des liens de fixation sus-claviculaires destinés à être positionnés de part et d'autre du cou d'un enfant, ainsi qu'au moins une boucle permettant de resserrer ces sangles sur l'enfant.

Il est connu que, même en présence d'un siège auto adapté, un accident ou même un freinage brutal peuvent entraîner des mouvements de l'enfant harnaché dans le siège auto susceptibles d'être traumatiques.

Cela est d'autant plus le cas quand le choc survient face à l'enfant, amenant ce dernier à être comprimé par les moyens de harnachement qui agissent pour éviter que l'enfant soit expulsé du siège.

Le document de l'état de la technique publié sous le n° DE4200847 propose un siège auto monté mobile en rotation sur une embase destinée à être fixée sur un siège de véhicule, conçu pour positionner le siège dos au choc.

Ce siège auto est mobile sur l'embase autour d'un axe de rotation vertical, et l'embase présente, un mécanisme permettant de maintenir le siège auto dans une position de transport prédéterminée. Par exemple, le mécanisme comprend une bille montée sur un ressort permettant d'indexer la position angulaire du siège auto sur l'embase.

Dans ce document, il est proposé de positionner des poids sur l'arrière du siège, ou d'équiper le système de retenue d'un volant d'inertie pour permettre la rotation du fauteuil en cas de survenue d'un accident.

Ceci permet, par exemple dans un cas où le véhicule est impacté, de positionner le siège auto dos à l'impact, pour plaquer l'enfant situé dans le siège auto contre le dossier enfant du siège auto.

De cette manière, la sécurisation de l'enfant est améliorée et les moyens d'harnachement sont moins sollicités (évitant notamment de comprimer la cage thoracique de l'enfant) et/ou moins susceptibles de laisser s'échapper l'enfant.

Un tel système présente toutefois une conception complexe.

Il existe également un besoin continu d'améliorer la protection d'un enfant installé dans un siège auto lors de la survenue d'un choc.

L'invention a notamment pour objectif de palier aux inconvénients et au besoin de l'art antérieur.

Plus précisément, l'invention a pour objectif de proposer un système de retenue qui comprend un siège auto monté pivotant sur une embase et qui présente une conception plus simple que ce que propose l'état de la technique tout en améliorant la sécurité de l'enfant situé dans le siège auto en cas de survenue d'un choc ou d'une décélération brutale du véhicule.

Ces objectifs, ainsi que d'autres qui apparaîtront par la suite, sont atteints grâce à l'invention qui a pour objet un système de retenue pour enfant, destiné à équiper un siège de véhicule pourvu d'une assise et d'un dossier, comprenant :
- une embase destinée à prendre place sur l'assise du siège du véhicule, s'étendant latéralement de part et d'autre d'un premier plan sagittal médian ;
- des moyens de fixation de l'embase à des points d'ancrage du véhicule présentés par le siège de véhicule ;
- un siège auto comprenant une assise enfant et un dossier enfant, le siège auto étant monté mobile en rotation sur l'embase, autour d'un axe haut/bas écarté du dossier enfant et s'étendant transversalement à une surface supérieure de l'assise du siège de véhicule, le siège auto présentant un centre de gravité décalé de l'axe haut/bas et s'étendant latéralement de part et d'autre d'un deuxième plan sagittal médian dans lequel s'inscrit le centre de gravité du siège auto et l'axe haut/bas ;
- des moyens de maintien du siège auto dans une position de transport dans laquelle l'enfant est destiné à faire face ou à être positionné dos au dossier du siège de véhicule, les moyens de maintien exerçant un effort prédéterminé de maintien du siège auto dans sa position de transport, les moyens de maintien du siège auto étant conçus pour libérer la rotation le siège auto au-delà de sa position de transport en cas où une force d'inertie supérieure à l'effort prédéterminé, provoquée par une modification brutale du mouvement du véhicule équipé du siège auto, s'exerce sur le siège auto,
   caractérisé en ce que, dans la position de transport, le premier plan sagittal médian est avec le deuxième plan sagittal médian.

Etant donné que l'embase de siège du véhicule est fixée sur des points d'ancrage du véhicule qui adoptent classiquement une position prédéterminée dans le véhicule, alors l'embase adopte elle aussi, une fois fixée sur les points d'ancrage, une position prédéterminée et une orientation prédéterminée dans le véhicule.

De cette manière, l'embase fixée sur les points d'ancrage présente un premier plan sagittal médian qui s'étend parallèlement à un plan longitudinal médian du véhicule. En d'autres termes, l'embase couplée aux points d'ancrage du véhicule présente une orientation telle qu'elle est alignée longitudinalement avec l'axe longitudinal arrière/ avant du véhicule. Il peut également être considéré que, si le véhicule avance en ligne droite et suit alors un axe de déplacement d'arrière en avant, alors le premier plan sagittal médian est parallèle à cet axe d'arrière en avant du véhicule.

De ce fait, étant donné que le deuxième plan sagittal médian est sécant avec le premier plan sagittal médian, alors le deuxième plan sagittal médian est également sécant avec le plan longitudinal médian du véhicule, et avec la droite d'arrière en avant du véhicule.

Ainsi, il doit être considéré que le siège auto, dans sa position de transport, présente une orientation angulaire de biais par rapport à l'axe longitudinal du véhicule dans lequel le système de retenue est utilisé.

De cette manière, l'axe haut/bas autour duquel le siège auto est mobile en rotation et le centre de gravité du siège auto ne sont pas alignés sur une droite parallèle à l'axe longitudinal du véhicule.

Ceci a pour conséquence que dans le cas où le véhicule subirait une accélération ou une décélération brutale d'avant en arrière, ou d'arrière en avant, le siège auto présenterait une propension à être entraîné en rotation autour de l'axe haut/bas grâce au fait que le centre de gravité est déjà désaxé du premier plan sagittal médian, et selon un sens de rotation prédéterminé en fonction de l'inclinaison de biais.

Selon un exemple concret, dans une voiture pourvue d'un siège conducteur, d'un siège passager situé en côté du siège conducteur, et d'une rangée arrière de siège de véhicule, le décalage angulaire du premier plan sagittal médian par rapport au deuxième plan sagittal médian peut se concrétiser par une orientation légèrement de biais en direction du siège du conducteur pour un siège auto positionné sur un siège de véhicule situé derrière le fauteuil avant passager.

Selon un autre exemple, dans le cas où le siège auto est un cosy bébé destiné pour un très jeune enfant et que l'enfant doit être positionné dos à la route, alors le siège auto est positionné dos à la route mais les moyens de maintien permettent d'orienter le dos de l'enfant légèrement en direction de l'extérieur du véhicule. Ainsi, le centre de gravité du siège auto est plus proche de l'extérieur du véhicule que ne l'est l'axe haut/ bas autour duquel le siège auto est mobile en rotation.

Si le véhicule est à l'arrêt et qu'un deuxième véhicule vient le percuter par l'arrière. Alors, le véhicule pourvu du siège auto subit une brusque accélération d'arrière en avant. Dans ce cas, les moyens de maintien du siège auto dans sa position de transport libèrent la rotation du siège auto du fait que la force d'inertie est supérieure à l'effort prédéterminé. Le siège auto tourne alors autour de son axe haut/bas, sous l'effet de la force d'inertie, et positionne le dossier enfant vers l'arrière du véhicule, dos à l'origine du choc.

Cette conception évite d'avoir recours à des poids supplémentaires ou à un volant d'inertie complémentaire qui complexifierait le siège auto.

Selon un mode de réalisation préféré, les moyens de maintien comprennent :
- au moins un premier organe porté par l'embase ;
- au moins un second organe porté par le siège auto ;
le premier organe et le second organe étant complémentaire en couplage l'un de l'autre, et exerçant l'effort prédéterminé dans une position couplée dans laquelle le premier organe et le second organe sont en regard l'un de l'autre selon un plan perpendiculaire à l'axe haut/bas, et le premier organe est positionné en côté du premier plan sagittal médian ou le second organe est positionné en côté du deuxième plan sagittal médian.

Grâce à ce mode de réalisation, l'orientation angulaire du siège auto sur l'embase est déterminée grâce à la position du ou des premiers organes ou du et des seconds organes des moyens de maintien.

Préférentiellement, les moyens de maintien sont mobiles entre deux positions indexées pour orienter la position de transport du siège auto sur l'embase d'un côté ou de l'autre du premier plan sagittal médian.

De cette manière, le siège auto peut être positionné pour faire face d'un côté ou de l'autre de l'embase.

Il est alors conseillé d'orienter le siège auto vers l'intérieur du véhicule. Si le siège auto est positionné sur la droite du véhicule, alors les moyens de maintien doivent être configurés de manière à ce que le siège auto et l'enfant situé dans le siège auto soit légèrement décalé pour regarder vers la gauche dans le véhicule. Inversement, si le siège est positionné sur la gauche du véhicule, alors les moyens de maintien sont configurés pour que le siège auto et l'enfant situé dans le siège auto soit légèrement décalé pour regarder vers la droite dans le véhicule.

Selon une caractéristique avantageuse, l'embase comprend deux emplacements situés de part et d'autre du premier plan sagittal médian, chaque emplacement étant apte à recevoir le ou l'un des premiers organes des moyens de maintien.

Seul un premier organe des moyens de maintien est nécessaire et ce premier organe des moyens de maintien doit être positionné dans l'un ou l'autre des deux emplacements selon la position du siège auto dans l'habitacle du véhicule.

Selon une solution préférentielle, le ou les premiers organes, et le ou les seconds organes sont des aimants.

Des aimants sont particulièrement avantageux du fait qu'ils exercent une force d'attraction l'un vers l'autre particulièrement importante mais qu'ils exercent également un effort prédéterminé tendant à les maintenir l'un en face de l'autre.

Il est ainsi utilisé le fait qu'une force de cisaillement suffisante, aisément déterminable, puisse séparer le ou les premiers organes magnétiques du ou des seconds organes magnétiques des moyens de maintien selon un mouvement de rotation du siège auto sur l'embase.

Préférentiellement, le système de retenue comprend des moyens de verrouillage de la position angulaire du siège auto sur l'embase autour de l'axe haut/bas.

De tels moyens de verrouillage permettent d'empêcher la rotation du siège auto sur l'embase.

En effet, à partir d'un certain âge il n'est plus nécessaire que le siège auto puisse réaliser une rotation du fait que l'enfant présente la capacité physique à supporter les effets d'une décélération ou accélération brutale en étant simplement harnaché.

Selon une conception préférentielle, le siège auto est démontable de l'embase, le système de retenue comprenant un mécanisme de débrayage d'une liaison pivot du siège auto autour de l'axe haut/bas sur l'embase.

Il est ainsi possible de positionner le siège autour sur un support roulant pour former une poussette.

Ceci est particulièrement avantageux du fait qu'il suffit simplement de passer le siège auto du support roulant à l'embase et inversement pour faciliter les liaisons d'un lieu à un autre.

Selon une caractéristique et plus particulièrement avantageuse, le système de retenue comprend :
- un élément dorsal couplé à l'embase par une liaison autorisant au moins un pivotement de l'élément dorsal par rapport à l'embase,
- des moyens de mise en appui de l'élément dorsal sur l'embase, les moyens de mise en appui étant réglables pour forcer l'application de l'élément dorsal sur le dossier d'un siège de véhicule dans lequel l'embase est installée.

L'élément dorsal et les moyens de mise de mise en appui de l'élément dorsal sur l'embase permet d'appliquer l'embase sur l'assise du siège auto du véhicule.

On évite ainsi des mouvements de soulèvement de l'embase en cas de survenue d'un choc.

On assure ainsi également une parfaite mobilité en rotation du siège auto sur l'embase.

Préférentiellement, l'élément dorsal comprend des moyens de couplage sur des tiges d'appui-tête.

Le verrouillage en position de l'embase grâce à l'élément dorsal est ainsi renforcé.

Selon un mode de réalisation avantageux, les moyens de fixation comprennent :
- un corps d'ancrage destiné à être ancré sur des points d'ancrage du véhicule présentés par le siège de véhicule ;
- un mécanisme de couplage du corps d'ancrage à l'embase le long d'un axe s'étendant parallèlement à une droite sur laquelle s'inscrivent les points d'ancrage du véhicule.

Grâce à de tels moyens de fixation, il est possible de déplacer l'embase latéralement par rapport aux points d'ancrage.

Ceci permet d'éloigner l'embase d'une portière, par exemple, pour éviter que la portière ne gêne un mouvement de rotation du siège auto en situation d'urgence.

Préférentiellement, le corps d'ancrage des moyens de fixation comprend une barre de réglage le long de laquelle l'embase peut être positionnée et couplée.

Une telle barre de réglage permet de régler avec précision la position de l'embase vis-à-vis des points d'ancrage.

Dans ce cas, selon un mode de réalisation avantageux, la barre de réglage s'étend sur une longueur au moins double de la largeur d'un siège de véhicule, le corps d'ancrage des moyens de fixation étant susceptible d'être ancré simultanément sur des points d'ancrage du véhicule présentés par au moins deux sièges de véhicule, la barre de réglage étant configurée pour pouvoir être couplée simultanément à au moins deux embases.

De cette manière le système de retenue permet grâce à un seul corps d'ancrage de fixer et de positionner précisément au moins deux embases sur une banquette arrière d'un véhicule.

Selon une caractéristique avantageuse, le système de retenue comprend des moyens de sécurisation des membres d'un enfant assis dans le siège auto, les moyens de sécurisation comprenant des organes de ceinturage d'un membre associés chacun à une sangle et à un enrouleur automatique.

De tels moyens de sécurisation permettent d'éviter des mouvements incontrôlés de l'enfant, et notamment de rétracter ses bras et ses jambes dans le cas où un choc survient et que le siège auto est entraîné autour de son axe haut/bas.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- [Fig.1] la [Fig.1] est une représentation schématique selon une vue en perspective de dessus d'un système de retenue selon l'invention, comprenant une embase installée sur un siège de véhicule et un siège auto couplé sur l'embase, le siège auto adoptant une position face à la route ;
- [Fig.2] la [Fig.2] est une représentation schématique en perspective du système de retenue selon un second mode de réalisation dans lequel le siège auto prend la forme d'un cosy bébé adapté aux enfants en très bas âge, le siège auto adoptant une position face à la route ;
- [Fig.3] la [Fig.3] est une représentation schématique selon une vue de côté du système de retenue selon le deuxième mode de réalisation, le siège auto adoptant une position de transport dans laquelle l'enfant fait dos à la route ;
- [Fig.4] la [Fig.4] est une représentation schématique de côté du seul système de retenue selon le deuxième mode de réalisation, le siège auto présentant une orientation par rapport à l'embase correspondant à celle adoptée sur la [Fig.2];
- [Fig.5] la [Fig.5] est une vue en perspective arrière de dessus du système de retenue selon le deuxième mode de réalisation ;
- [Fig.6] la [Fig.6] est une représentation schématique selon une vue en perspective arrière de dessus du système de retenue représenté en coupe longitudinale selon un plan médian ;
- [Fig.7] la [Fig.7] est une vue en perspective du dessus d'une embase du système de retenue selon l'invention ;
- [Fig.8] la [Fig.8] est une représentation schématique en perspective vue de face du siège auto du deuxième mode de réalisation, centré sur une partie interne du siège auto ;
- [Fig.9] la [Fig.9] est une représentation schématique de principe de dessus du système de retenue installé dans un véhicule et de la position adoptée par le siège auto en en position de transport.

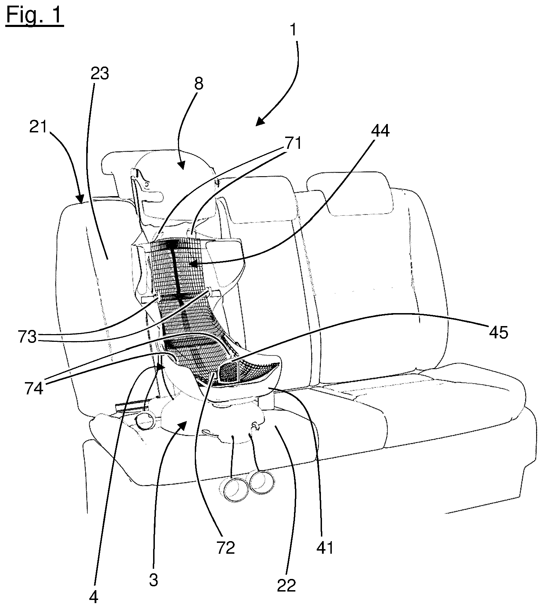

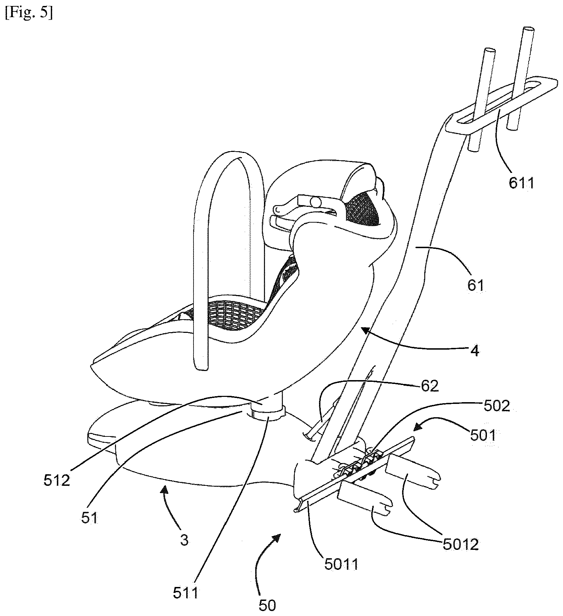

Les figures 1 à 9 illustrent un système 1 de retenue pour enfants, destiné à équiper un siège 21 d'un véhicule 2.

Le siège 21 de véhicule 2 est pourvu d'une assise 22 et d'un dossier 23.

Classiquement, les véhicules 2 comprennent des points d'ancrage 24 faisant partie des systèmes de sécurisation des sièges auto enfants développés sous la norme « ISOFIX».

Ces points d'ancrage 24 prennent la forme de boucles présentant une tige s'étendant horizontalement, et sont situés à la rencontre d'une assise 22 et d'un dossier 23 d'un siège 21 de véhicule 2.

Chaque siège 21 présente deux points d'ancrage 24.

En référence à la [Fig.1], une rangée arrière de sièges 21 d'un véhicule 2 est représentée et le système 1 de retenue est installé sur l'un des sièges 21 extérieurs de la rangée.

Le siège 21 comprend également un appui tête monté mobile en translation sur le dossier 23 à l'aide de deux tiges.

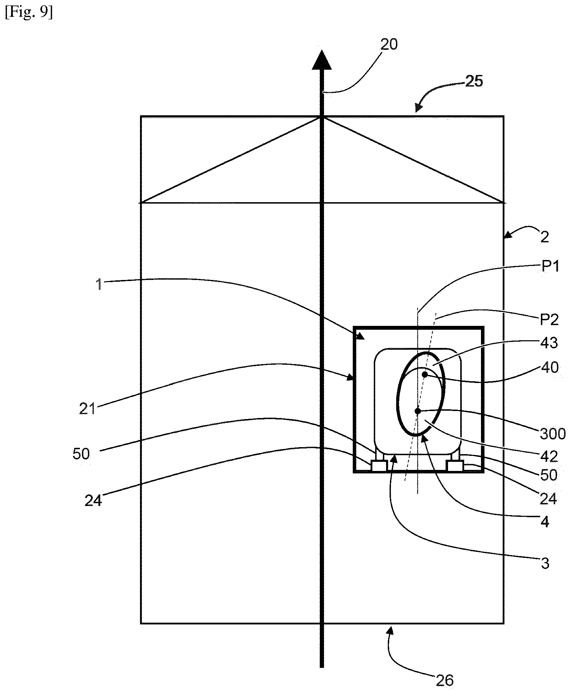

En référence à la [Fig.9], le véhicule 2 et un axe arrière/avant 20 du véhicule 2 sont représentés de manière schématique.

Dans le cas où le véhicule 2 avance en ligne droite alors cet axe arrière/avant 20 représente le mouvement de déplacement du véhicule 2.

En d'autres termes, le véhicule présente un avant 25 et un arrière 26 le long de l'axe arrière/avant 20.

Par rapport à cet axe arrière/avant 20, les points d'ancrage 24 au niveau du siège 21 du véhicule 2 sont situés (ou s'inscrivent) dans un même plan qui s'étend perpendiculairement à cet axe arrière/avant 20.

En effet, les sièges 21 d'un véhicule 2 sont positionnés pour faire face à la route selon une configuration classique.

En référence aux figures 1 à 9, le système 1 de retenue comprend une embase 3 et un siège auto 4 monté sur l'embase 3.

L'embase 3 est destinée à prendre place sur l'assise 22 du siège 21 du véhicule 2.

Cette embase 3, présente un plan sagittal médian, nommé premier plan sagittal médian P1, qui est représenté sur la [Fig.9].

Ce premier plan sagittal médian P1 partage en deux parties égales l'embase 3 dans sa longueur.

L'embase 3 s'étend ainsi latéralement de part et d'autre de ce premier plan sagittal médian P1.

Le système 1 comprend également des moyens de fixation 50 de l'embase 3 sur les points d'ancrage 24 du véhicule 2, ces points d'ancrage 24 étant présentés par le siège 21 tel qu'expliqué précédemment.

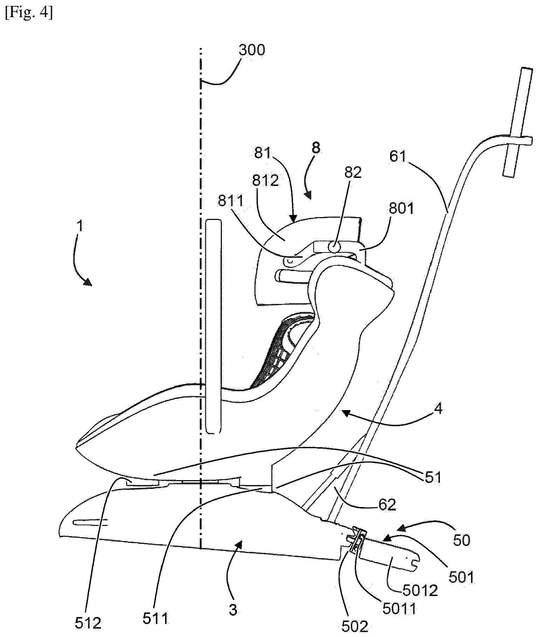

En référence aux figures 4 à 6, les moyens de fixation 50 comprennent un corps d'ancrage 501 qui est destiné à être ancré sur les points d'ancrage 24 du véhicule 2, et un mécanisme de couplage 502 du corps d'ancrage 501 à l'embase 3.

Plus précisément en référence aux figures 1 à 6, le corps d'ancrage 501 est composé d'une barre de réglage 5011 et de deux pattes de fixation 5012.

Les deux pattes de fixation 5012 s'étendent depuis la barre de réglage 5011.

Plus précisément, ces deux pattes de fixation 5012 s'étendent perpendiculairement à la barre de réglage 5011, et chacune de ces pattes de fixation 5012 est destinée à s'arrimer sur l'un des points d'ancrage 24 du véhicule 2.

La barre de réglage 5011 définit un axe qui s'étend parallèlement à une droite sur laquelle s'inscrivent les points d'ancrage 24 du véhicule 2, une fois que le corps d'ancrage est fixé sur les points d'ancrage 24.

Le mécanisme de couplage peut par exemple prendre la forme de griffes pouvant être resserrées à l'aide d'une vis à main.

De cette manière, le mécanisme de couplage 502 du corps d'ancrage 501 à l'embase 3 permet de coupler l'embase 3 le long de la barre de réglage 5011 et ainsi le long de l'axe s'étendant parallèlement à la droite sur laquelle s'inscrivent les points d'ancrage 24.

De cette manière, l'embase 3 peut être déplacée latéralement sur le siège 21 du véhicule 2.

Cette capacité à être déplacée latéralement est particulièrement avantageuse vis-à-vis du siège auto 4 tel que cela est expliqué par la suite.

Selon un mode de réalisation non représenté, la barre de réglage 5011 s'étend sur une longueur au moins double à la largeur d'un siège 21 de véhicule 2.

Alors, le corps d'ancrage 501 des moyens de fixation 50 peut être ancré simultanément sur des points d'ancrage 24 du véhicule 2 présenté par au moins deux sièges 21 immédiatement adjacents du véhicule 2, ces deux sièges 21 étant bien évidemment situés sur la même rangée de sièges.

Ceci permet à la barre d'ancrage 5011 de pouvoir être associée simultanément à au moins deux embases 3.

De cette façon, deux sièges auto 4 peuvent être couplés sur une même barre de réglage 5011 et être tous les deux positionnés et réglés sur les sièges 21 de la rangée de sièges du véhicule 2.

Le système 1 de retenue selon les présents modes de réalisation comprend également :
- un élément dorsal 61 qui est couplé à l'embase 3 par une liaison autorisant au moins un pivotement de l'élément dorsal par rapport à l'embase 3 ;
- des moyens de mise en appui 62 de l'élément dorsal 61 sur l'embase 3.

Ces moyens de mise en appui 62 prennent la forme d'une vis et notamment d'un vérin à vis qui permet d'appliquer une tension et d'assurer l'écartement entre l'élément dorsal 61 et l'embase 3.

Ces moyens de mise en appui 62 sont réglables et forcent l'application de l'élément dorsal 61 sur le dossier 23 du siège 21 du véhicule 2 dans lequel l'embase 3 est installé.

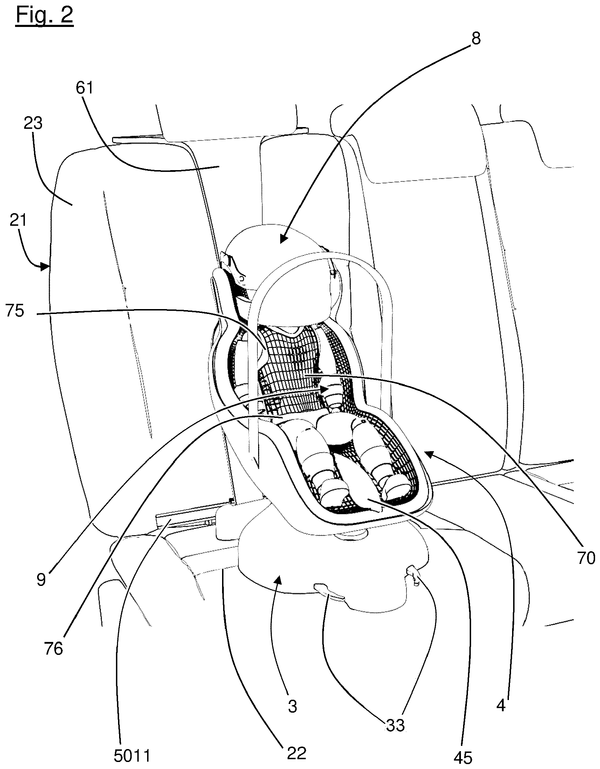

En référence plus spécifiquement aux figures 2, 4 et 5, l'élément dorsal 61 comprend des moyens de couplage 611 sur les tiges d'appui tête.

Ces moyens de couplage 611 prennent la forme d'une rainure au travers de laquelle les deux tiges d'un appui tête peuvent s'étendre pour venir s'accoupler sur le dossier 23 du siège 21.

Cette rainure permet notamment le décalage de l'embase 3 latéralement sur le siège 21.

La liaison couplant l'embase 3 à l'élément dorsal 61 permet de maintenir assemblé l'élément dorsal 61 à l'embase 3 alors que les moyens de mise en appui 62 exercent une pression tendant à les écarter.

L'élément dorsal 61 et les moyens de mise en appui 62 permettent ainsi de maintenir plaquée l'embase 3 sur l'assise 22 du siège 21.

Le siège auto 4, et son association avec l'embase 3 sont à présent décrits en relation avec les figures 2 à 7.

Le siège auto 4 selon l'invention, est monté mobile en rotation sur l'embase 3 autour d'un axe haut/bas 300.

Cet axe haut/bas 300 est matérialisé par une liaison pivot 30.

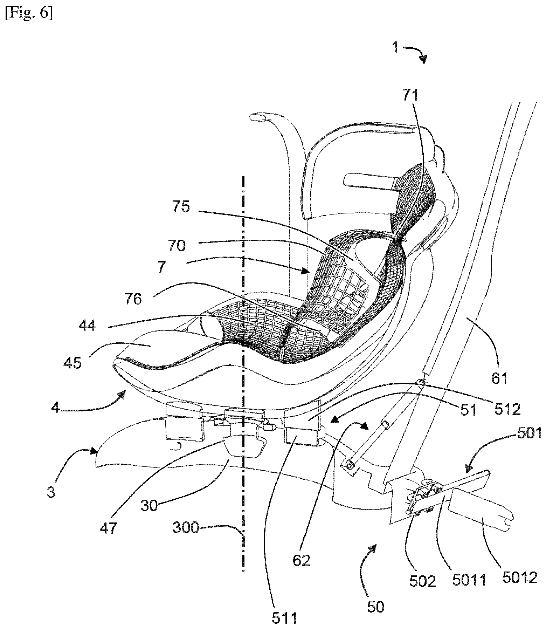

En effet, tel qu'illustré par la [Fig.6], le siège auto 4 présente une tige de pivotement 47 qui fait saillie en dessous du siège auto 4. Cette tige de pivotement 47 présente une gorge annulaire.

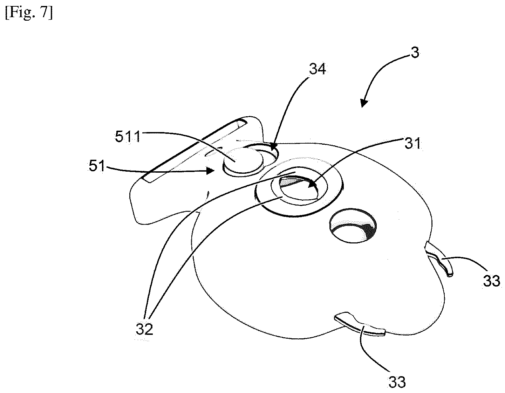

A présent en référence aux figures 6 et 7, l'embase 3 présente un trou supérieur 31 au travers de laquelle la tige de pivotement 47 est insérée.

Des mâchoires 32 de l'embase 3 se referment sur la tige de pivotement 47, dans la gorge annulaire, pour établir la liaison pivot et permettre le pivotement du siège auto 4 autour de l'axe haut/bas 300, sur l'embase 3.

Le siège auto 4 est mobile en rotation à 360° sur l'embase 3.

Selon les présents modes de réalisation, le siège auto 4 est démontable de l'embase 3.

A cet effet, le système 1 de retenue comprend également un mécanisme de débrayage 52 de la liaison pivot 30 du siège auto 4 autour de l'axe haut/bas 300 sur l'embase 3.

Ce mécanisme de débrayage 52 est formé par des manettes 33 présentées par l'embase 3, chacune des manettes 33 permettant d'ouvrir les mâchoires 32 et de permettre l'extraction de la tige de pivotement 47 du trou supérieur 31 présenté par l'embase 3.

Le débrayage de la liaison pivot et l'extraction du siège auto 4 permettent de sécuriser rapidement un enfant installé dans le siège auto 4, par exemple suite à un accident.

Ces moyens permettent également, par le biais d'un support à roulettes compatible, de transformer le siège auto 4 en un siège de poussette.

En référence aux figures 1 à 6, 8 et 9, le siège auto 4 comprend une assise enfant 42 et un siège enfant 43.

Cette assise enfant 42 et le dossier enfant 43 sont notamment partiellement formés par une coque externe 41 du siège auto 4.

L'axe haut/bas 300 est écarté du dossier enfant 43 et s'étend transversalement à une surface supérieure de l'assise 22 du siège 21 du véhicule 2.

Plus précisément, le siège auto 4 est configuré pour que l'axe haut/bas 300 s'étende au niveau de l'assise enfant 42 essentiellement entre les jambes d'un enfant positionné dans le siège auto 4.

Tel qu'illustré schématiquement par la [Fig.9], le siège auto 4 présente un centre de gravité 40 dont l'emplacement, ou le volume où il est destiné à être situé, est spécifiquement prédéterminé.

Ce centre de gravité 40 est décalé de l'axe haut/bas 300 et est notamment positionné du côté du dossier enfant 43.

Le siège auto 4 est bien entendu configuré pour que ce centre de gravité 40 soit toujours positionné du côté du dossier enfant 43 une fois qu'un enfant est installé dans le siège auto 4.

Tel qu'illustré par les figures 6 et 9, le siège auto 4 s'étend latéralement de part et d'autre d'un plan sagittal médian, nommé deuxième plan sagittal médian P2.

Ce deuxième plan sagittal médian P2 est un plan longitudinal partageant en deux parties égales le siège auto 4. Le centre de gravité 40 du siège auto 4 et l'axe haut/bas 300 s'inscrivent tous les 2 dans le deuxième plan sagittal médian P2.

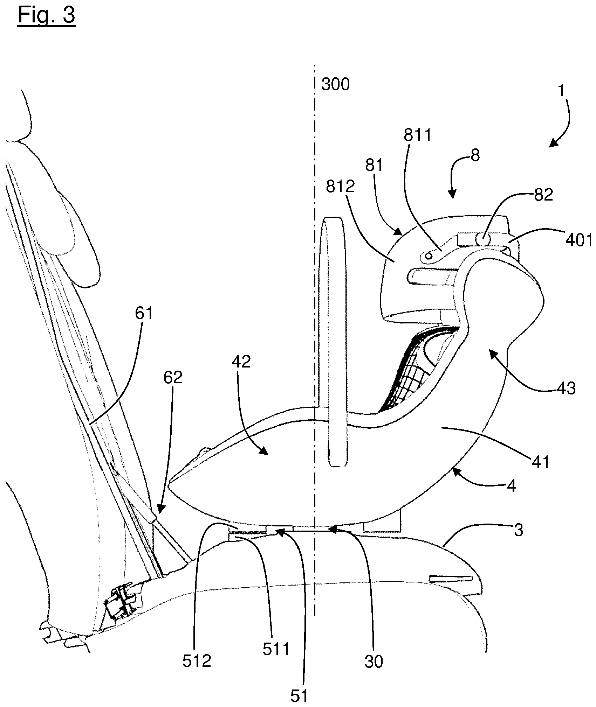

En référence aux figures 3 à 7, le système 1 de retenue comprend également des moyens de maintien 51 du siège auto 4 dans une position de transport dans laquelle l'enfant est destiné à faire face ([Fig.3]) ou à faire dos ([Fig.1]) au dossier 23 du siège 21 de véhicule 2 sur lequel le système de retenue 1 est installé.

Ces moyens de maintien 51 exercent un effort prédéterminé de maintien du siège auto 4 dans sa position de transport.

Ces moyens de maintien 51 du siège auto 4 sont spécifiquement conçus pour libérer la rotation du siège auto 4 au-delà de sa position de transport dans le cas où une force d'inertie supérieure à l'effort prédéterminé s'exerce sur le siège auto 4. Cette force d'inertie s'exerçant sur le siège auto 4 peut être provoquée par une modification brutale du mouvement du véhicule 2, par exemple lors d'une collision.

En d'autres termes, les moyens de maintien 51 maintiennent le siège auto 4 dans sa position de transport par rapport à l'embase 3 en exerçant un effort prédéterminé.

Dans le cas où, par exemple, le véhicule 2 freine brutalement ou est percuté, alors une force d'inertie du siège auto 4 va à l'encontre de l'effort prédéterminé et le siège auto 4 est alors entraîné en rotation sous l'effet de l'inertie, au-delà de sa position de transport.

De cette manière, les moyens de maintien 51 qui sont destinés à maintenir le siège auto 4 dans une position angulaire prédéterminée vis-à-vis de l'embase 2 ne sont plus actifs et le siège auto 4 peut alors librement pivoter autour de son axe haut/bas 300.

Selon un autre exemple, dans le cas où un freinage du véhicule 2 est trop brutal alors le siège auto 4 se positionne dos à la route et plaque l'enfant 2 contre le dossier enfant 43.

En référence à la [Fig.3], une accélération brutale du véhicule vers l'avant est susceptible de faire libérer le siège auto 4 de sa position de transport et de le faire tourner pour qu'il fasse face à la route tel que cela est illustré par la [Fig.2].

Les moyens de maintien 51, selon les présents modes de réalisation comprennent un premier organe 511 porté par l'embase 3 et un second organe 512 porté par le siège auto 4.

Il est envisageable que ces moyens de maintien 51 comprennent plusieurs premiers organes 511 et plusieurs seconds organes 512.

Le premier organe 511 et le second organe 512 sont complémentaire en couplage l'un de l'autre, et exercent l'effort prédéterminé dans une position couplée dans laquelle le premier organe 511 et le second organe 512 sont au regard l'un de l'autre selon un plan perpendiculaire à l'axe haut/bas 300 (figures 3 et 6).

Dans la position de transport du siège auto 4, le premier plan sagittal médian P1 est sécant avec le deuxième plan sagittal médian P2.

De cette façon, dans sa position de transport, le siège auto 4 présente une orientation de biais par rapport à la position de l'embase 3 au regard de leur plan sagittal médian respectif. Les plans sagittal médian ne sont pas parallèles l'un à l'autre.

Cette orientation de biais est représentée sur la [Fig.9].

Cette orientation de biais matérialisée par le fait que le premier plan sagittal médian P1 est sécant avec le deuxième plan sagittal médian P2, permet que le centre de gravité 40 du siège auto 4 ne s'inscrit pas dans un plan qui serait parallèle à l'axe arrière/avant 20 du véhicule 2.

Le premier plan sagittal médian P1 est notamment sécant avec le deuxième plan sagittal médian sur l'axe haut/bas 300.

Ceci permet de contraindre la rotation réalisée par le siège auto 4 selon un sens souhaité, en cas de survenue d'un événement brutal.

En référence à la [Fig.9], une accélération brutale vers l'avant du véhicule 2 entraîne une rotation du siège auto 4 de manière à ce que le siège auto 4 soit toujours orienté vers l'intérieur du véhicule.

Pour définir la position de transport du siège auto 4, alors le premier organe 511 est positionné en côté du premier plan sagittal médian P1 ou alors le second organe 512 est positionné en côté du deuxième plan sagittal médian P2.

Selon les présents modes de réalisation, le second organe 512, porté par le siège auto 4 est centré sur le deuxième plan sagittal médian P2 et il s'agit du premier organe 511 qui est positionné en côté du premier sagittal médian P1.

Tel que cela est illustré par la [Fig.7], les moyens de maintien 51 sont mobiles entre deux positions indexées pour orienter la position de transport du siège auto 4 sur l'embase 3 d'un côté ou de l'autre du premier plan sagittal médian P1.

En effet, l'embase 3 présente deux emplacements 34 symétriques l'un de l'autre par rapport au premier plan sagittal médian P1. Ces deux emplacements 34 sont chacun apte à recevoir le premier organe 511.

De cette manière, le premier organe 511 peut être déplacé dans l'un ou l'autre de ces emplacements 34 pour prédéfinir la position de transport du siège auto 4.

Selon le présent mode de réalisation et de manière préférentielle, le ou les premiers organes 511 et le ou les seconds organes 512 sont des aimants.

Les aimants sont plus spécifiquement en néodyme.

Le système 1 de retenue comprend des moyens de verrouillage de la position angulaire du siège auto 4 sur l'embase 3 autour de l'axe haut/bas 300. Ces moyens de verrouillage prennent par exemple la forme d'un pion, décalé de l'axe haut/bas 300, apte à être descendu depuis le siège auto 4 jusque dans une cavité présentée par l'embase 3. Le pion forme alors une butée empêchant une rotation du siège auto 4 sur l'embase 3.

Le siège auto 4 est décrit plus en détail par la suite en référence aux figures 1, 2, 6 et 8.

Tel qu'évoqué précédemment, le siège auto 4 comprend une assise enfant 42 et un dossier enfant 43 qui sont partiellement formés par la coque externe 41.

En référence aux figures 1, 2, 6 et 8 le système 1 de retenue comprend également des moyens d'harnachement 7 d'un enfant dans le siège auto 4.

Les moyens de harnachement 7 comprennent au moins trois liens de fixation au siège auto 4. Ces liens de fixation se couplent sur la coque externe 41.

Les moyens de harnachement 7 comprennent a minima deux liens sus-claviculaires 71 et un lien inférieur 72.

Les deux liens sus-claviculaires 71 s'étendent depuis le dossier enfant 43, de part et d'autre d'une position supposée d'une tête d'enfant assis dans le siège auto 4. Le lien inférieur 72 s'étend quant à lui de l'assise enfant 42 en étant destiné à prendre place au niveau de l'entre jambes de l'enfant assis dans le siège auto 4.

Selon les présents modes de réalisation, les moyens de harnachement comprennent également quatre autres liens de fixation au siège auto 4, dont deux liens sous-axillaires 73 et deux liens latéraux 74.

Les deux liens sous-axillaires 73 s'étendent du siège auto 4 de part et d'autre d'une position supposée d'un buste d'enfant assis dans le siège auto 4.

Les deux liens latéraux 74 s'étendent quant à eux du siège auto 4 de part et d'autre d'une position supposée du bassin d'un enfant assis dans le siège auto 4.

Les moyens de harnachement 7 comprennent également un filet de harnachement 70 qui est couplé au moins au lien inférieur 72 et aux deux liens sus-claviculaires 71.

Selon les présents modes de réalisation, le filet de harnachement 70 est également couplé aux quatre autres liens de fixation au siège auto 4.

Le filet de harnachement 70 se déploie entre les liens de fixation qui le couplent à la coque externe 41.

Au niveau de chaque lien de fixation qui s'étend du siège auto 4, une attache rapide permet de détacher le filet de harnachement 70 dudit point de fixation, ou de l'attacher.

Depuis chacun de ces points de fixation, le filet de harnachement se déploie jusqu'aux autres points de fixation pour exercer un maintien d'un enfant dans le siège auto 4, non pas sur une surface délimitée par une simple bande, mais sur la surface délimitée entre l'ensemble des points de fixation.

Ce filet de harnachement 7 est élastiquement déformable .

Les moyens de harnachement 7 comprennent avantageusement également une pièce de ceinturage de torse 75 qui se couple directement aux deux liens sus-claviculaires 71 et aux deux liens sous axillaires 73.

Le filet de harnachement 70 est associé à la pièce de ceinturage de torse 75. En d'autres termes, le filet de harnachement 70 se couple le long de la pièce de ceinturage de torse 75 qui elle-même se couple directement aux quatre liens de fixation.

Les moyens de harnachement 7 comprennent également une pièce de ceinturage de bassin 76 qui se couple directement aux deux liens latéraux 74 et aux liens inférieurs 72. Le filet de harnachement 70 est également associé à la pièce de ceinturage de bassin 76.

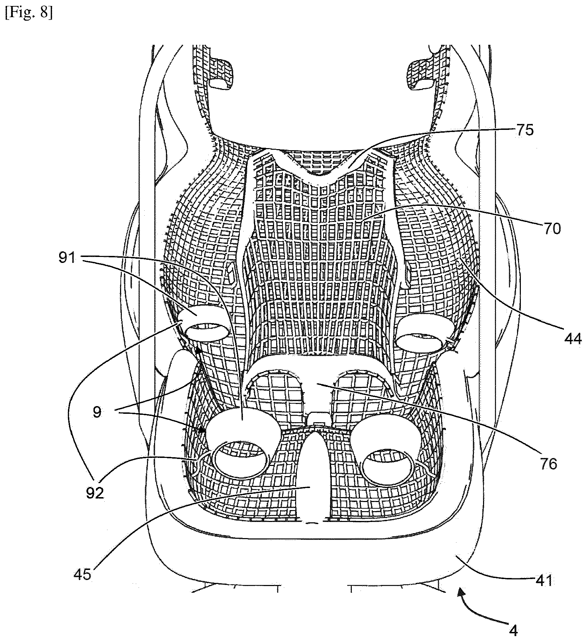

Plus précisément, selon le présent mode de réalisation et en référence à la [Fig.8], la pièce de ceinturage de torse 75 et la pièce de ceinturage de bassin 76 se regroupent et sont formées par un unique bandeau périphérique continu qui est destiné à s'étendre entre les liens de fixation et à délimiter en son centre un espace qui est occupé par le filet de harnachement 70.

Les attaches rapides sont situées directement à l'interface entre les pièces de ceinturage de torse 75 et de bassin 76 et les liens de fixation 72, 74.

En d'autres termes, le filet de harnachement 70 s'étend au sein du bandeau périphérique continu en étant couplé au bandeau périphérique continu de manière ininterrompue le long du bandeau périphérique continu.

Le siège auto 4 comprend également un rembourrage qui est formé par des poches gonflables. Ces poches gonflables présentent chacune au moins une perforation qui permet une fuite d'air à un débit prédéterminé en cas d'écrasement de la poche gonflable.

Ces poches gonflables sont notamment du type « auto gonflantes » et comprennent par exemple un matériau interne à mémoire de forme qui permet à la poche de recouvrer son volume une fois qu'elle n'est plus écrasée.

La perforation permettant la fuite d'air permet également à l'air de rentrer dans la poche une fois qu'elle n'est plus comprimée, pour qu'elle puisse recouvrer son volume originel.

Le siège auto 4 présente également un revêtement interne 44 contre lequel l'enfant assis dans le siège auto 4 est destiné à être amené en contact.

Tel qu'illustré par les figures, ce revêtement interne 44 est formé par un filet interne.

Le filet interne est couplé à la coque externe 41 sur sa périphérie, de manière directe ou indirecte.

Le filet interne est également couplé au siège auto 4 par le biais de liens qui s'étendent entre les poches gonflantes, au niveau de l'assise enfant 42 et du dossier enfant 43.

Ces liens forcent le filet interne à épouser la forme interne du siège auto 4.

Tel que cela est illustré par les figures 2, 6 et 8, le siège auto 4 présente également une séparation 45 en saillie destinée à venir forcer un écartement des jambes de l'enfant installé dans le siège auto 4.

En référence aux figures 1, 2 et 8, le système 1 de retenue comprend encore des moyens de sécurisation 9 des membres d'un enfant assis dans le siège auto 4. Ces moyens de sécurisation 9 comprennent des organes de ceinturage 91 d'un membre de l'enfant.

Ces organes de ceinturage 91 sont par exemple formés par une bande auto agrippante qui doit être enroulée autour du poignet ou de la cheville de l'enfant. Ces organes de ceinturage 91 sont associés chacun à une sangle 92 et à un enrouleur automatique.

Ces moyens de sécurisation 9 permettent de forcer un rappel automatique des membres de l'enfant dans une position prédéterminée dans laquelle les membres ne font pas saillie hors du siège auto 4.

Ceci permet, lors d'une rotation du siège auto 4 entraînée par un choc ou par une décélération brutale du véhicule 2 d'éviter que les membres de l'enfant ne ressortent du siège auto 4.

En référence aux figures 1 à 6, le système 1 comprend également un dispositif de protection 8 de la tête d'un enfant assis dans le siège auto 4.

Ce dispositif de protection 8 comprend un élément de protection 81 qui est mobile entre une position relevée et une position abaissée dans laquelle il est destiné à être positionné en face de la tête d'un enfant assis dans le siège auto 4.

L'élément de protection 81 comprend deux bras 811, un cerceau frontal 812 et des éléments amortisseurs de mouvements de la tête d'un enfant assis dans le siège auto 4.

Selon les présents modes de réalisation, le cerceau frontal 812 est intégré à un casque et permet de protéger contre des projections d'objets en provenance de l'avant du siège auto 4, mais également du dessus du siège auto 4.

Dans une forme plus simple non représentée, le cerceau frontal 812 présente uniquement une forme plus étroite destinée à maintenir la tête d'un enfant pour éviter des mouvements avec un débattement trop important.

Le cerceau frontal 812 peut également comprendre des parties transparentes permettant à un enfant de voir son environnement au travers du cerceau frontal 812.

Les éléments amortisseurs produisent un amortissement quand l'élément de protection 81 est dans sa position abaissée.

Ces éléments amortisseurs sont situés à l'intérieur du cerceau frontal 812.

Les deux bras 811 sont couplés mobiles sur le siège auto 4, et le cerceau frontal 812 est porté par les deux bras 811.

Plus précisément, le siège auto 4 présente deux supports 401 s'étendant au-dessus du dossier enfant 43.

Les deux bras 811 sont alors couplés mobiles en rotation sur les deux supports 401 par le biais d'une liaison pivot.

Le dispositif de protection 8 comprend également un mécanisme de verrouillage 82 de l'élément de protection 81 dans sa position abaissée.

Ce mécanisme de verrouillage 82 empêche que l'élément de protection 81 ne se relève de sa position abaissée de manière non désirée. Le mécanisme de verrouillage 82 est configuré pour s'actionner lorsque l'élément de protection 81 atteint sa position abaissée.

Le mécanisme de verrouillage 82 est intégré directement dans la liaison pivot couplant les deux bras 811 aux deux supports 401.

Le mécanisme de verrouillage 82 comprend par exemple un cran qui s'engage dans un logement quand l'élément de protection 81 atteint sa position abaissée. Le mécanisme de verrouillage 82 peut également comprendre un actionneur prenant la forme d'un bouton poussoir, situé sur la liaison pivot, qui permet de libérer le cran de son logement pour permettre de remonter l'élément de protection 81.

Le mécanisme de verrouillage 82 peut également être formé par des aimants ce qui présente l'avantage de ne pas nécessiter une action supplémentaire pour relever l'élément de protection autre que celle d'appliquer une force suffisante pour relever l'élément de protection.

Selon le principe de l'invention, l'élément de protection 81 est configuré pour passer dans sa position relevée à sa position abaissée sous l'effet d'une force d'inertie susceptible d'être provoquée par une modification brutale du mouvement du véhicule 2 équipé du siège auto 4.

Par exemple, l'élément de protection 81 peut présenter une position relevée qui est simplement une position en équilibre instable.

Selon un autre exemple, potentiellement combinable avec d'autres exemples, dans la position relevée de l'élément de protection 81, le centre de gravité de l'élément de protection 81 est opposé à la position abaissée de l'élément de protection par rapport à un plan vertical dans lequel s'inscrit la liaison pivot.

Également, le dispositif de protection 8, peut comprendre des contrepoids qui sont configurés pour maintenir l'élément de protection 81 dans sa position relevée.

Il est également envisageable que le dispositif de protection 8 comprenne des aimants qui seraient configurés pour maintenir l'élément de protection 81 dans sa position relevée.

Dans ce cas, au moins un aimant est alors porté directement par l'élément de protection 81, par exemple dans l'un de ses bras 811, et au moins un deuxième aimant est alors porté par le siège auto 4, au niveau de l'un des supports 401.

Enfin, le dispositif de protection 8 peut comprendre un mécanisme de rappel élastique de l'élément de protection dans sa position relevée.

Un tel mécanisme de rappel élastique peut être formé par des ressorts.

Suite à l'installation d'un enfant dans le siège auto 4, l'élément de protection 81 peut être laissé dans sa position relevée.

C'est alors seulement en cas de survenue d'un évènement indésirable provoquant une force d'inertie supérieure à un seuil prédéterminé que l'élément de protection 81 passe alors de sa position relevée à sa position abaissée protégeant éventuellement l'enfant de projection d'objets dans l'habitacle du véhicule 2, et exerçant alors un maintien et un amortissement de la tête de l'enfant.

Naturellement, il est possible de rabaisser directement l'élément de protection 81 dans sa position abaissée suite à l'installation de l'enfant dans le siège auto 4.

## Revendications

1. Système (1) de retenue pour enfant, destiné à équiper un siège (21) d'un véhicule (2) pourvu d'une assise (22) et d'un dossier (23), comprenant :
- une embase (3) destinée à prendre place sur l'assise (22) du siège (21) du véhicule (2), s'étendant latéralement de part et d'autre d'un premier plan sagittal médian (P1) ;
- des moyens de fixation (50) de l'embase (3) à des points d'ancrage (24) du véhicule (2) présentés par le siège (21) de véhicule (2) ;
- un siège auto (4) comprenant une assise enfant (42) et un dossier enfant (43), le siège auto (4) étant monté mobile en rotation sur l'embase (3), autour d'un axe haut/bas (300) écarté du dossier enfant (43) et s'étendant transversalement à une surface supérieure de l'assise (22) du siège (21) de véhicule (2), le siège auto (4) présentant un centre de gravité (40) décalé de l'axe haut/bas (300) et s'étendant latéralement de part et d'autre d'un deuxième plan sagittal médian (P2) dans lequel s'inscrit le centre de gravité (40) du siège auto (4) et l'axe haut/bas (300) ;
- des moyens de maintien (51) du siège auto (4) dans une position de transport dans laquelle l'enfant est destiné à faire face ou à être positionné dos au dossier (23) du siège (21) de véhicule (2), les moyens de maintien (51) exerçant un effort prédéterminé de maintien du siège auto (4) dans sa position de transport, les moyens de maintien (51) du siège auto (4) étant conçus pour libérer la rotation le siège auto (4) au-delà de sa position de transport en cas où une force d'inertie supérieure à l'effort prédéterminé, provoquée par une modification brutale du mouvement du véhicule (2) équipé du siège auto (4), s'exerce sur le siège auto (4), **caractérisé en ce que**, dans la position de transport, le premier plan sagittal médian (P1) est sécant avec le deuxième plan sagittal médian (P2).

2. Système (1) de retenue selon la revendication précédente, **caractérisé en ce que** les moyens de maintien (51) comprennent :
- au moins un premier organe (511) porté par l'embase (3) ;
- au moins un second organe (512) porté par le siège auto (4) ;
le premier organe (511) et le second organe (512) étant complémentaire en couplage l'un de l'autre, et exerçant l'effort prédéterminé dans une position couplée dans laquelle le premier organe (511) et le second organe (512) sont en regard l'un de l'autre selon un plan perpendiculaire à l'axe haut/bas (300),
et **en ce que** le premier organe (511) est positionné en côté du premier plan sagittal médian (P1) ou le second organe (512) est positionné en côté du deuxième plan sagittal médian (P2).

3. Système (1) de retenue selon la revendication précédente, **caractérisé en ce que** les moyens de maintien (51) sont mobiles entre deux positions indexées pour orienter la position de transport du siège auto (4) sur l'embase (3) d'un côté ou de l'autre du premier plan sagittal médian (P1).

4. Système (1) de retenue selon l'une quelconque des revendications 2 et 3, **caractérisé en ce que** le ou les premiers organes (511), et le ou les seconds organes (512) sont des aimants.

5. Système (1) de retenue selon l'une quelconque des revendications précédentes, **caractérisé en ce qu'**il comprend des moyens de verrouillage de la position angulaire du siège auto (4) sur l'embase (3) autour de l'axe haut/bas (300).

6. Système (1) de retenue selon l'une quelconque des revendications précédentes, **caractérisé en ce que** le siège auto (4) est démontable de l'embase (3), le système (1) de retenue comprenant un mécanisme de débrayage (52) d'une liaison pivot (30) du siège auto (4) autour de l'axe haut/bas (300) sur l'embase (3).

7. Système (1) de retenue selon l'une quelconque des revendications précédentes, **caractérisé en ce qu'**il comprend :
- un élément dorsal (61) couplé à l'embase (3) par une liaison autorisant au moins un pivotement de l'élément dorsal (61) par rapport à l'embase (3),
- des moyens de mise en appui (62) de l'élément dorsal (61) sur l'embase (3), les moyens de mise en appui (62) étant réglables pour forcer l'application de l'élément dorsal (61) sur le dossier (23) d'un siège (21) de véhicule (2) dans lequel l'embase (3) est installée.

8. Système (1) de retenue selon la revendication précédente, **caractérisé en ce que** l'élément dorsal (61) comprend des moyens de couplage (611) sur des tiges d'appui-tête.

9. Système (1) de retenue selon l'une quelconque des revendications précédentes, **caractérisé en ce que** les moyens de fixation (50) comprennent :
- un corps d'ancrage (501) destiné à être ancré sur des points d'ancrage (24) du véhicule (2) présentés par le siège (21) de véhicule (2) ;
- un mécanisme de couplage (502) du corps d'ancrage (501) à l'embase (3) le long d'un axe s'étendant parallèlement à une droite sur laquelle s'inscrivent les points d'ancrage (24) du véhicule (2).

10. Système (1) de retenue selon la revendication précédente, **caractérisé en ce que** le corps d'ancrage (501) des moyens de fixation (50) comprend une barre de réglage (5011) le long de laquelle l'embase (3) peut être positionnée et couplée.

11. Système (1) de retenue selon la revendication précédente, **caractérisé en ce que** la barre de réglage (5011) s'étend sur une longueur au moins double de la largeur d'un siège (21) de véhicule, le corps d'ancrage (501) des moyens de fixation (50) étant susceptible d'être ancré simultanément sur des points d'ancrage (24) du véhicule (2) présentés par au moins deux sièges (21) de véhicule (2), la barre de réglage (5011) étant configurée pour pouvoir être couplée simultanément à au moins deux embases (3).

12. Système (1) de retenue selon l'une quelconque des revendications précédentes, **caractérisé en ce qu'**il comprend des moyens de sécurisation (9) des membres d'un enfant assis dans le siège auto (4), les moyens de sécurisation (9) comprenant des organes de ceinturage (91) d'un membre associés chacun à une sangle (92) et à un enrouleur automatique.

## Patentansprüche

1. Rückhaltesystem (1) für ein Kind, das dazu bestimmt ist, einen Sitz (21) eines Fahrzeugs (2), der mit einer Sitzfläche (22) und einer Rückenlehne (23) versehen ist, auszustatten, umfassend:
- einen Sockel (3), der dazu bestimmt ist, auf der Sitzfläche (22) des Sitzes (21) des Fahrzeugs (2) Platz zu nehmen, der sich seitlich beiderseits einer ersten medianen Sagittalebene (P1) erstreckt;
- Befestigungsmittel (50) des Sockels (3) an Verankerungspunkten (24) des Fahrzeugs (2), die vom Sitz (21) des Fahrzeugs (2) dargeboten werden;
- einen Autositz (4), der eine Kindersitzfläche (42) und eine Kinderrückenlehne (43) umfasst, wobei der Autositz (4) um eine von oben nach unten verlaufende Achse (300), die von der Kinderrückenlehne (43) entfernt ist, und sich quer zu einer oberen Oberfläche der Sitzfläche (22) des Sitzes (21) des Fahrzeugs (2) erstreckt, drehbeweglich auf dem Sockel (3) montiert ist, wobei der Autositz (4) einen von der von oben nach unten verlaufenden Achse (300) versetzten Schwerpunkt (40) aufweist, und sich seitlich beiderseits einer zweiten medianen Sagittalebene (P2) erstreckt, in welcher sich der Schwerpunkt (40) des Autositzes (4) und die von oben nach unten verlaufende Achse (300) befinden;
- Haltemittel (51) des Autositzes (4) in einer Transportposition, in der das Kind dazu bestimmt ist, der Rückenlehne (23) des Sitzes (21) eines Fahrzeugs (2) zu- oder abgewandt zu sein, wobei die Haltemittel (51) eine vorbestimmte Haltekraft des Autositzes (4) in seiner Transportposition ausüben, wobei die Haltemittel (51) des Autositzes (4) gestaltet sind, um die Drehung des Autositzes (4) über dessen Transportposition hinaus in einem Fall freizugeben, in dem eine größere Trägheitskraft als die vorbestimmte Kraft, die durch eine unerwartete Änderung der Bewegung des mit dem Autositz (4) ausgestatteten Fahrzeugs (2) hervorgerufen wird, auf den Autositz (4) ausgeübt wird, **dadurch gekennzeichnet, dass** in der Transportposition die erste mediane Sagittalebene (P1) die zweite mediane Sagittalebene (P2) schneidet.

2. Rückhaltesystem (1) nach dem vorstehenden Anspruch, **dadurch gekennzeichnet, dass** die Haltemittel (51) umfassend:
- mindestens ein erstes Organ (511), das von dem Sockel (3) getragen wird;
- mindestens ein zweites Organ (512), das von dem Autositz (4) getragen wird;
wobei das erste Organ (511) und das zweite Organ (512) einander bezüglich der Kopplung ergänzen, und die vorbestimmte Kraft in einer gekoppelten Position, in der das erste Organ (511) und das zweite Organ (512) einander in einer zur von oben nach unten verlaufenden Achse (300) senkrechten Ebene gegenüberstehen, ausüben,
und dadurch, dass das erste Organ (511) neben der ersten medianen Sagittalebene (P1) positioniert ist, oder das zweite Organ (512) neben der zweiten medianen Sagittalebene (P2) positioniert ist.

3. Rückhaltesystem (1) nach dem vorstehenden Anspruch, **dadurch gekennzeichnet, dass** die Haltemittel (51) zwischen zwei indexierten Positionen beweglich sind, um die Transportposition des Autositzes (4) auf dem Sockel (3) auf einer Seite oder der anderen der ersten medianen Sagittalebene (P1) auszurichten.

4. Rückhaltesystem (1) nach einem der Ansprüche 2 und 3, **dadurch gekennzeichnet, dass** das oder die ersten Organe (511) und das oder die zweiten Organe (512) Magneten sind.

5. Rückhaltesystem (1) nach einem der vorstehenden Ansprüche, **dadurch gekennzeichnet, dass** es Mittel zum Verriegeln der Winkelposition des Autositzes (4) auf dem Sockel (3) um die von oben nach unten verlaufende Achse (300) herum umfasst.

6. Rückhaltesystem (1) nach einem der vorstehenden Ansprüche, **dadurch gekennzeichnet, dass** der Autositz (4) von dem Sockel (3) demontierbar ist, wobei das Rückhaltesystem (1) einen Kupplungslösemechanismus (52) einer Schwenkverbindung (30) des Autositzes (4) um die nach unten verlaufende Achse (300) auf dem Sockel (3) umfasst.

7. Rückhaltesystem (1) nach einem der vorstehenden Ansprüche, **dadurch gekennzeichnet, dass** es umfasst:
- ein Rückenelement (61), das durch eine Verbindung an den Sockel (3) gekoppelt ist, die mindestens einen Schwenk des Rückenelements (61) in Bezug auf den Sockel (3) erlaubt,
- Anlegemittel (62) des Rückenelements (61) auf dem Sockel (3), wobei die Anlegemittel (62) einstellbar sind, um das Anlegen des Rückenelements (61) an die Rückenlehne (23) eines Sitzes (21) eines Fahrzeugs (2), in dem der Sockel (3) angebracht ist, zu erzwingen.

8. Rückhaltesystem (1) nach dem vorstehenden Anspruch, **dadurch gekennzeichnet, dass** das Rückenelement (61) Kopplungsmittel (611) an Kopfstützengestängen umfasst.

9. Rückhaltesystem (1) nach einem der vorstehenden Ansprüche, **dadurch gekennzeichnet, dass** die Befestigungsmittel (50) umfassen:
- einen Verankerungskörper (501), der dazu bestimmt ist, an den Verankerungspunkten (24) des Fahrzeugs (2), die vom Sitz (21) des Fahrzeugs (2) dargeboten werden, verankert zu werden;
- einen Kopplungsmechanismus (502) des Verankerungskörpers (501) an dem Sockel (3) entlang einer Achse, die sich parallel zu einer Geraden erstreckt, auf der sich die Verankerungspunkte (24) des Fahrzeugs (2) befinden.

10. Rückhaltesystem (1) nach dem vorstehenden Anspruch, **dadurch gekennzeichnet, dass** der Verankerungskörper (501) der Befestigungsmittel (50) eine Einstellleiste (5011) umfasst, entlang derer der Sockel (3) positioniert und gekoppelt werden kann.

11. Rückhaltesystem (1) nach dem vorstehenden Anspruch, **dadurch gekennzeichnet, dass** sich die Einstellleiste (5011) über eine Länge mindestens doppelt so groß wie die Breite eines Fahrzeugsitzes (21) erstreckt, wobei der Verankerungskörper (501) der Befestigungsmittel (50) gleichzeitig an den Verankerungspunkten (24) des Fahrzeugs (2), die von mindestens zwei Sitzen (21) des Fahrzeugs (2) dargeboten werden, verankert werden kann, wobei der die Einstellleiste (5011) konfiguriert ist, um gleichzeitig mit mindestens zwei Sockeln (3) gekoppelt werden zu können.

12. Rückhaltesystem (1) nach einem der vorstehenden Ansprüche, **dadurch gekennzeichnet, dass** es Mittel zum Sichern (9) der Gliedmaßen eines in dem Autositz (4) sitzenden Kindes umfasst, wobei die Mittel zum Sichern (9) Umfassungsorgane (91) für eine Gliedmaße umfasst, die jeweils einem Gurt (92) und einer automatischen Aufrollvorrichtung zugeordnet sind.

## Claims

1. A child restraint system (1) intended to equip a seat (21) of a vehicle (2) provided with a seat (22) and a backrest (23), comprising:
- a base (3) intended to be placed on the seat portion (22) of the seat (21) of the vehicle (2), extending laterally on both side of a first mid-sagittal plane (P1);
- means (50) for fastening the base (3) to anchor points (24) of the vehicle (2) on the seat (21) of the vehicle (2) ;
- a car seat (4) comprising a child seat portion (42) and a child backrest (43), the car seat (4) being mounted movable in rotation on the base (3), about an up/down axis (300) spaced apart from the child backrest (43) and extending transversely to an upper surface of the seat portion (22) of the seat (21) of the vehicle (2), the car seat (4) having a centre of gravity (40) offset from the up/down axis (300) and extending laterally on both side of a second mid-sagittal plane (P2) in which the centre of gravity (40) of the car seat (4) and the up/down axis (300) are inscribed;
- means (51) for holding the car seat (4) in a transport position in which the child is intended to face or to be positioned back to the backrest (23) of the seat (21) of the vehicle (2), the holding means (51) exerting a predetermined force for holding the car seat (4) in its transport position, the means (51) for holding the car seat (4) being designed so as to free the rotation of the car seat (4) beyond its transport position in the event where an inertial force greater than the predetermined force, caused by a brutal modification of the movement of the vehicle (2) equipped with the car seat (4), is exerted on the car seat (4),
**characterised in that**, in the transport position, the first mid-sagittal plane (P1) is secant with the second mid-sagittal plane (P2).

2. The restraint system (1) according to the preceding claim, **characterised in that** the holding means (51) comprise:
- at least one first member (511) carried by the base (3);
- at least one second member (512) borne by the car seat (4) ;
the first member (511) and the second member (512) being complementary in coupling with one another, and exerting the predetermined force in a coupled position in which the first member (511) and the second member (512) face one another according to a plane perpendicular to the up/down axis (300),
and **in that** the first member (511) is positioned on the side of the first mid-sagittal plane (P1) or the second member (512) is positioned on the side of the second mid-sagittal plane (P2).

3. The restraint system (1) according to the preceding claim, **characterised in that** the holding means (51) are movable between two indexed positions to orient the transport position of the car seat (4) on the base (3) on either side of the first mid-sagittal plane (P1).

4. The restraint system (1) according to any one of claims 2 and 3, **characterised in that** the first member(s) (511) and the second member(s) (512) consist of magnets.

5. The restraint system (1) according to any one of the preceding claims, **characterised in that** it comprises means for locking the angular position of the car seat (4) on the base (3) about the up/down axis (300).

6. The restraint system (1) according to any one of the preceding claims, **characterised in that** the car seat (4) can be dismounted from the base (3), the restraint system (1) comprising a mechanism (52) for disengaging a pivot connection (30) of the car seat (4) about the up/down axis (300) on the base (3).

7. The restraint system (1) according to any one of the preceding claims, **characterised in that** it comprises:
- a back element (61) coupled to the base (3) through a connection enabling at least one pivoting of the back element (61) relative to the base (3),
- means (62) for bearing the back element (61) on the base (3), the bearing means (62) being adjustable to force the application of the back element (61) on the backrest (23) of a seat (21) of a vehicle (2) in which the base (3) is installed.

8. The restraint system (1) according to the preceding claim, **characterised in that** the back element (61) comprises means (611) for coupling on headrest rods.

9. The restraint system (1) according to any one of the preceding claims, **characterised in that** the fastening means (50) comprise:
- an anchor body (501) intended to be anchored on anchor points (24) of the vehicle (2) on the seat (21) of the vehicle (2);
- a mechanism (502) for coupling the anchor body (501) to the base (3) along an axis extending parallel to a straight line on which the anchor points (24) of the vehicle (2) are inscribed.

10. The restraint system (1) according to the preceding claim, **characterised in that** the anchor body (501) of the fastening means (50) comprises an adjustment bar (5011) along which the base (3) can be positioned and coupled.

11. The restraint system (1) according to the preceding claim, **characterised in that** the adjustment bar (5011) extends over a length at least twice as large as the width of a vehicle seat (21), the anchor body (501) of the fastening means (50) could be anchored simultaneously on anchor points (24) of the vehicle (2) on at least two seats (21) of the vehicle (2), the adjustment bar (5011) being configured to be able to be simultaneously coupled to at least two bases (3).

12. The restraint system (1) according to any one of the preceding claims, **characterised in that** it comprises means (9) for securing the limbs of a child sitting in the car seat (4), the securing means (9) comprising members (91) for belting a limb each associated with a strap (92) and with an automatic winder.
